# EUROPEAN PATENT APPLICATION

(11) **EP 1 580 698 A1**
(43) Date of publication of application: **28.09.2005**
(21) Application number: 05006738.8
(22) Date of filing: 29.03.2005
(51) Int. Cl.: G07F 7/08, G06F 17/60, G07F 19/00

(54) **Method, system and computer program product for processing a financial transaction request**

(30) Priority: 26.03.2004 US 811011
(71) Applicant: ClearCommerce Corporation, Texas 78759 (US)
(72) Inventor: Micci-Barreca, Daniele, Austin Texas 78732 (US)
(74) Representative: Grünecker, Kinkeldey, Stockmair & Schwanhäusser Anwaltssozietät

(57) **Abstract**

In response to multiple rules having respective weights, an information handling system determines whether a financial transaction request is likely fraudulent.

## Description

### BACKGROUND

This description relates in general to information handling systems and in particular to a method, system, and computer program product for processing a financial transaction request. In response to a customer's financial transaction request, a financial transaction may be conducted with the customer by a provider of a product or service, such as a merchant or a loan provider (e.g., credit card company, bank, merchant that extends credit for the purchase of its product or service, or other lender). In doing so, the provider incurs a risk of approving a financial transaction request that is fraudulent, so that the customer may ultimately fail to fulfill one or more obligations (e.g., repay credit provided to the customer) associated with the financial transaction. Such a risk causes various problems, including a potential financial loss to the provider and increased costs to other customers that submit financial transaction requests.

### SUMMARY

In response to multiple rules having respective weights, an information handling system determines whether a financial transaction request is likely fraudulent.

A principal advantage of this embodiment is that a provider incurs a lower risk of approving a financial transaction request that is fraudulent.

### BRIEF DESCRIPTION OF THE DRAWING

Fig. 1 is a block diagram of a system according to the illustrative embodiment.
Fig. 2 is a block diagram of a representative information handling system of Fig. 1.
Fig. 3 is a conceptual illustration of various processes executed by one or more information handling systems of Fig. 1.
Fig. 4 is a conceptual illustration of an organization of a rules database according to the illustrative embodiment.
Fig. 5 is a conceptual illustration of an organization of a rules history database according to the illustrative embodiment.
Fig. 6a is an illustration of a 1^{st} screen displayed by a display device of a provider and/or credit processor of Fig. 1.
Fig. 6b is an illustration of a 2^{nd} screen displayed by a display device of a provider and/or credit processor of Fig. 1.
Fig. 6c is an illustration of a 3^{rd} screen displayed by a display device of a provider and/or credit processor of Fig. 1.
Fig. 6d is an illustration of a 4^{th} screen displayed by a display device of a provider and/or credit processor of Fig. 1.

### DETAILED DESCRIPTION

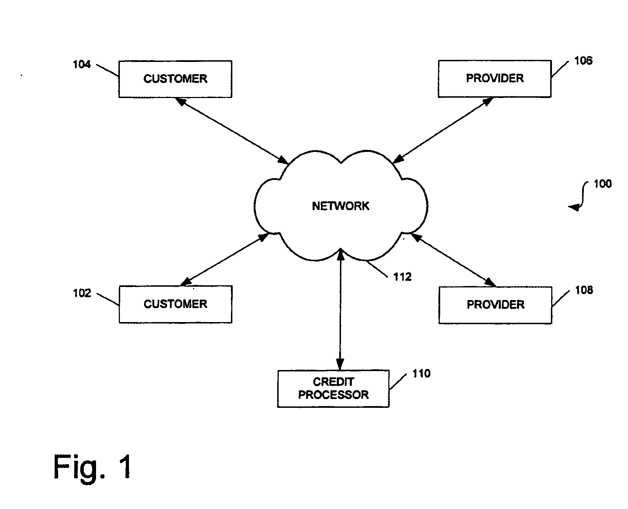

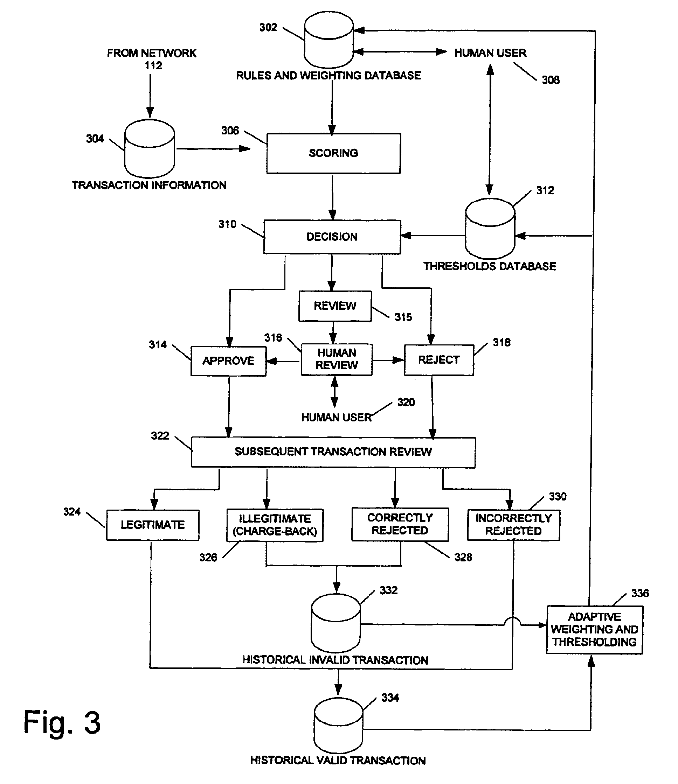

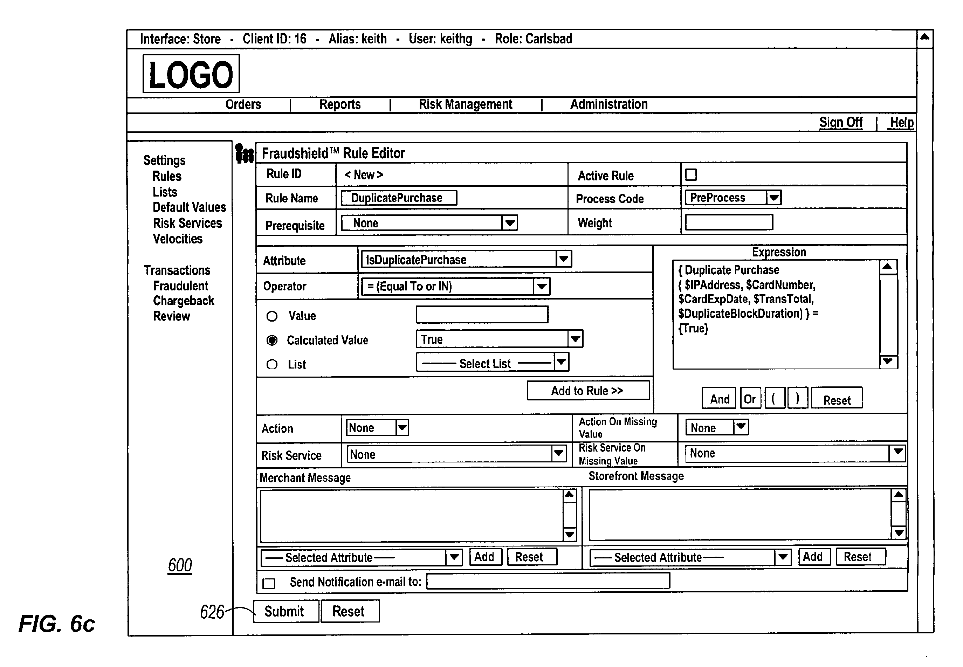

Fig. 1 is a block diagram of a system, indicated generally at 100 according to the illustrative embodiment. The system 100 includes: (a) customers 102 and 104; (b) providers 106 and 108, each for executing provider processes as discussed further hereinbelow in connection with Figs. 3-6d; and (c) a credit processor 110 for executing credit processor processes as discussed further hereinbelow in connection with FIGS 3-6d. The system 100 also includes a global computer network 112, such as a Transport Control Protocol/Internet Protocol ("TCP/IP") network (e.g., the Internet or an intranet).

Each of the customers 102 and 104, the providers 106 and 108, and the credit processor 110 includes a respective network interface for communicating with the network 112 (e.g., outputting information to and, and receiving information from, the network 112), such as by transferring information (e.g., instructions, data, signals) between such customer (or provider or credit processor) and the network 112. Accordingly, through the network 112, the credit processor 110 communicates with the customers 102 and 104, and the providers 106 and 108, and vice versa.

For clarity, Fig. 1 depicts only two customers 102 and 104, although the system 100 may include additional customers which are substantially identical to one another. Likewise, for clarity, Fig. 1 depicts only two providers 106 and 108, although the system 100 may include additional providers which are substantially identical to one another. Similarly, for clarity, Fig. 1 depicts only one credit processor 110, although the system 100 may include additional credit processors which are substantially identical to one another. In the discussion hereinbelow, the customer 102 is a representative one of the customers 102 and 104, and the provider 106 is a representative one of the providers 106 and 108.

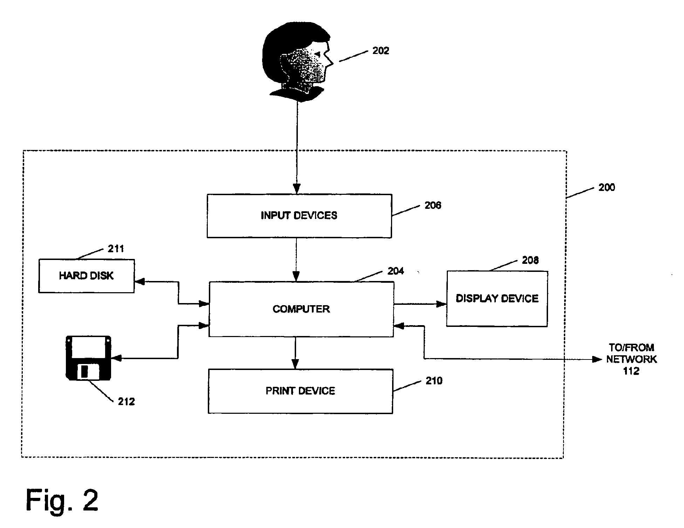

Each of the customers 102 and 104, the providers 106 and 108, the credit processor 110, and the network 112 is a respective information handling system ("IHS") for executing processes and performing operations (e.g., processing and communicating information) in response thereto, as discussed further hereinbelow in connection with Figs. 2-6d. Each such IHS is formed by various electronic circuitry components. Moreover, as shown in Fig. 1, all such IHSs are coupled to one another. Accordingly, the customers 102 and 104, the providers 106 and 108, and the credit processor 110 operate within the network 112.

In Fig. 1, each of the providers 106 and 108 includes (a) a merchant of products and/or services (e.g., provider of products and/or services via the Internet) or (b) a loan provider (e.g., credit card company, bank, merchant that extends credit for the purchase of its product or service, or other lender).

Fig. 2 is a block diagram of a representative one of the IHSs of Fig. 1. Such representative IHS is indicated by dashed enclosure 200. In the illustrative embodiment, each IHS of Fig. 1 operates in association with a respective human user. Accordingly, in the example of Fig. 2, the IHS 200 operates in association with a human user 202, as discussed further hereinbelow.

As shown in Fig. 2, the IHS 200 includes (a) a computer 204 for executing and otherwise processing instructions, (b) input devices 206 for receiving information from human user 202, (c) a display device 208 (e.g., a conventional electronic cathode ray tube ("CRT") device) for displaying information to user 202, (d) a print device 210 (e.g., a conventional electronic printer or plotter) for printing visual images (e.g., textual and graphic information) on paper, (e) a nonvolatile storage device 211 (e.g., a hard disk drive or other computer-readable medium (or apparatus), as discussed further hereinbelow) for storing information, (f) a computer-readable medium (or apparatus) 212 (e.g., a portable floppy diskette) for storing information, and (g) various other electronic circuitry for performing other operations of the IHS 200.

For example, the computer 204 includes (a) a network interface (e.g., circuitry) for communicating between the computer 204 and the network 112 and (b) a memory device (e.g., random access memory ("RAM") device and read only memory ("ROM") device) for storing information (e.g., instructions executed by computer 204 and data operated upon by computer 204 in response to such instructions). Accordingly, the computer 204 is connected to the network 112, the input devices 206, the display device 208, the print device 210, the storage device 211, and the computer-readable medium 212, as shown in Fig. 2.

For example, in response to signals from the computer 204, the display device 208 displays visual images, and the user 202 views such visual images. Moreover, the user 202 operates the input devices 206 in order to output information to the computer 204, and the computer 204 receives such information from the input devices 206. Also, in response to signals from the computer 204, the print device 210 prints visual images on paper, and the user 202 views such visual images.

The input devices 206 include, for example, a conventional electronic keyboard and a pointing device such as a conventional electronic "mouse", rollerball or light pen. The user 202 operates the keyboard to output alphanumeric text information to the computer 204, and the computer 204 receives such alphanumeric text information from the keyboard. The user 202 operates the pointing device to output cursor-control information to the computer 204, and the computer 204 receives such cursor-control information from the pointing device.

In the system 100, at least one respective IHS of the providers 106 and 108, and/or of the credit processor 110, is operable to determine whether a financial transaction request submitted by a customer's user (e.g., a human user of customer 102 or 104) is likely fraudulent, so that the IHS is more likely to approve a non-fraudulent financial transaction request and more likely to reject a fraudulent financial transaction request. To such IHS, the customer outputs information about (and in connection with) the financial transaction request, and such IHS receives the information. In response to the information, such IHS selectively approves or rejects the financial transaction request. For example, in connection with a financial transaction (e.g., a purchase) of a product or a service via the network 112 (e.g., the Internet), the IHS may approve such financial transaction request, so that the provider conducts the requested financial transaction with the customer's user.

In one example, the customer submits the financial transaction request by submitting information about an associated financial account (e.g., credit card account, debit card account, or checking account), such as the financial account's (a) holder, (b) number, (c) expiration date, and (d) billing address. In this example, to the IHS, the customer outputs such financial account information, together with information about an associated financial transaction ("transaction information"), such as (a) shipping address for a product of the financial transaction, (b) the customer's Internet Protocol ("IP") address, (c) the type of product or service, and (d) other financial and non-financial information associated with the financial transaction. Such financial account information and transaction information include various elements, which indicate (individually and/or in combination with other elements) a likelihood of whether the financial transaction request is fraudulent. Accordingly, in response to such financial account information and transaction information, as well as any available usage history information, the IHS determines whether the financial transaction request is likely fraudulent.

Accordingly, Fig. 3 is a conceptual illustration of various processes executed by the IHS. As shown in Fig. 3, the IHS executes a scoring process 306, a decision process 310, a human review process 316, a subsequent transaction review process 322, and an adaptive weighting and threshold adjustment ("adaptive adjustment") process 336. As discussed hereinabove, via the network 112, a customer outputs financial account information and transaction information in connection with a financial transaction request (and, optionally, in connection with an associated financial transaction between the customer's user and a provider). The IHS receives and stores such financial account information and transaction information in a transaction information database 304.

The scoring process 306 performs operations to determine a score in response to (a) such financial account information and transaction information from the transaction information database 304 and (b) rules information and weighting information from a rules and weighting database ("rules database'') 302. In response to the score, the decision process 310 (a) performs operations to determine a result by applying threshold information from a thresholds database 312 and (b) accordingly outputs either an approve result 314, a human review result 315, or a reject result 318 in response thereto. In response to the human review result 315, the human review process 316 (a) performs operations to determine a result by receiving information from a human user 320 (e.g., via input devices 206 of Fig. 2) and (b) accordingly outputs either the approve result 314 or the reject result 318 in response thereto.

In response to the approve result 314, the subsequent transaction review process 322 determines whether the approve result 314 is ultimately correct. For example, such determination may occur several weeks after the subsequent transaction review process 322 receives the approve result 314. In response to such determination, the subsequent transaction review process 322 outputs either: (a) a legitimate result 324 (together with the financial transaction request's associated financial account information and transaction information) for storage in a historical valid transaction database 334, if the approve result 314 is ultimately correct; or (b) an illegitimate (charge-back) result 326 (together with the 8nancial transaction request's associated financial account information and transaction information) for storage in a historical invalid transaction database 332, if the approve result 314 is ultimately incorrect. If the approve result 314 is ultimately correct, the financial transaction request has proved to be non-fraudulent. Conversely, if the approve result 314 is ultimately incorrect, the financial transaction request has proved to be fraudulent.

In response to the reject result 318, the subsequent transaction review process 322 determines whether the reject result 318 is ultimately correct. For example, such determination may occur several weeks after the subsequent transaction review process 322 receives the reject result 318. In response to such determination, the subsequent transaction review process 322 outputs either: (a) a correctly rejected result 328 (together with the financial transaction request's associated financial account information and transaction information) for storage in the historical invalid transaction database 332, if the reject result 318 is ultimately correct; or (b) an incorrectly rejected result 330 (together with the financial transaction request's associated financial account information and transaction information) for storage in the historical valid transaction database 334, if the reject result 318 is ultimately incorrect. If the reject result 318 is ultimately correct, the financial transaction request has proved to be fraudulent. Conversely, if the reject result 318 is ultimately incorrect, the financial transaction request has proved to be non-fraudulent.

In response to information stored in the valid transaction database 334 and the invalid transaction database 332, the adaptive adjustment process 336 performs its operations to identify trends or patterns in such information. In response to such trends and patterns, the adaptive adjustment process 336 further performs its operations to initialize and adapt (e.g., modify or adjust) the rule weighting information in the rules database 302 (and, optionally, threshold information in the thresholds database 312), in order to improve a predictive accuracy of such information (in the rules database 302 and thresholds database 312) for the scoring process 306 and decision process 310. In that manner, in response to such adapted information, the scoring process 306 and decision process 310 achieve improved accuracy in determining whether a subsequent financial transaction request (submitted by a customer's user) is likely fraudulent, so that the scoring process 306 and decision process 310 more accurately predict whether the financial transaction request will ultimately prove to be fraudulent.

The rules database 302, transaction information database 304, thresholds database 312, invalid transaction database 332, and valid transaction database 334 are stored in a hard disk (e.g., the hard disk 211) or other computer-readable media of the IHS. As shown in Fig. 3, a human user 308 communicates with the rules database 302 and thresholds database 312, and performs operations to store (e.g., add, delete, modify and/or otherwise edit) information stored in the rules database 302 and the thresholds database 312. Initially, the human user 308 populates (a) the valid transaction database 334 with information about one or more financial transaction requests (and, optionally, other financial account information and transaction information associated therewith) that are ultimately proved (e.g., determined from a preponderance of evidence) to be actually non-fraudulent and (b) the invalid transaction database 332 with information about one or more financial transaction requests (and, optionally, other financial account information and transaction information associated therewith) that are ultimately proved to be actually fraudulent.

In the rules database 302, the rules information includes one or more rules. In response to whether a financial transaction request's financial account information and/or transaction information (from transaction information database 304) satisfies (e.g., meets, activates, triggers) or fails one or more of the rules, the scoring process 306 determines that the financial transaction request has either an increased or decreased likelihood of being fraudulent, so that the score increases or decreases accordingly (e.g., inversely). In the thresholds database 312, the threshold information includes one or more threshold values. In response to whether the score (from the scoring process 306) exceeds or falls below one or more of the threshold values, the decision process 310 determines whether the financial transaction request is likely non-fraudulent, likely fraudulent, or instead within a scoring range for human review.

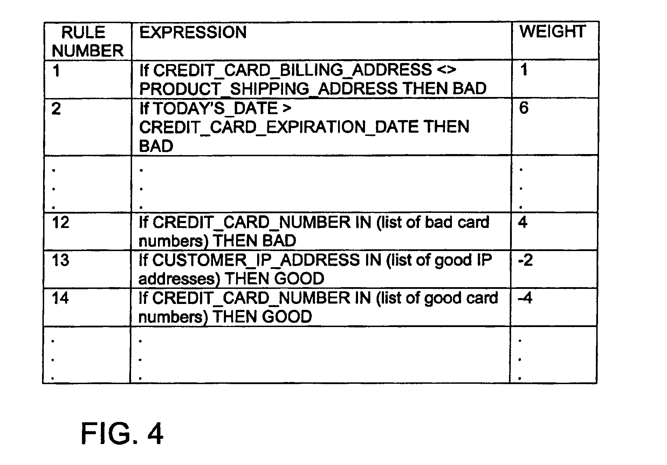

Fig. 4 is a conceptual illustration of an organization of the rules database 302 according to an illustrative embodiment. As shown in Fig. 4, the rules database 302 stores various types of information, which are illustrative (not exhaustive) of information stored in the rules database 302. For one or more rules, the rules database 302 includes information about the rule's respective (a) number, (b) logic expression, and (c) weight. During execution of the scoring process 306, if a rule's logic expression is satisfied by one or more elements of a financial transaction request's associated financial account information and transaction information, the IHS activates (e.g., triggers) the rule for contributing to the score (which indicates whether the financial transaction request is likely fraudulent). Conversely, if the rule's logic expression is not satisfied by the financial transaction request's associated financial account information and transaction information, the IHS does not so activate the rule for contributing to the score.

For example, rule number 1 of Fig. 4 includes a logic expression, "If CREDIT_CARD _BILLING_ADDRESS <> PRODUCT_SHIPPING_ADDRESS then bad." Rule number 1 of Fig. 4 is a "negative" rule, which contributes to the score in a manner that indicates the financial transaction request is likely fraudulent (e.g., indicates the financial transaction request has a decreased likelihood of being non-fraudulent). According to rule number 1, if the financial transaction request is submitted with information about a credit card, and if the credit card's billing address is not equal to a requested shipping address of the financial transaction's product, the IHS activates the rule for contributing to the score in a manner that indicates the financial transaction request is likely fraudulent.

Also, the rules database 302 includes one or more "positive" rules (e.g., rule numbers 13 and 14 of Fig. 4), which contribute to the score in a manner that indicates the financial transaction request is likely non-fraudulent (e.g., indicates the financial transaction request has an increased likelihood of being non-fraudulent). For example, rule number 13 of Fig. 4 includes a logic expression, "if CUSTOMER_IP_ADDRESS in {list of good IP addresses} then good." According to rule number 13, if the customer's IP address is located in a list of known good IP addresses, the IHS activates the rule for contributing to the score in a manner that indicates the financial transaction request is likely non-fraudulent.

In the rules database 302, a rule's respective weight indicates the rule's magnitude of contribution to the score, if the rule is activated in response to the financial account information and transaction information. Such weight is relative to weights of other rules in the rules database 302. In the example of Fig. 4, rule numbers 1, 2, 12, 13 and 14 have respective weights of 1, 6, 4, -2, and -4. Accordingly, in a comparison between activations of rule numbers 1 and 2, the activation of rule number 2 has a greater indication (by a factor of 6) that the financial transaction request is likely fraudulent.

A negative rule's weight is variable between zero and any real number greater than zero. Conversely, a positive rule's weight is variable between zero and any real number less than zero. Accordingly, the weights of rule numbers 1, 2, and 12 have a first +/- sign (e.g., a positive sign), and the weights of rule numbers 13 and 14 have a second +/- sign (e.g., a negative sign) opposite of the first +/- sign.

In an alternative embodiment, a negative rule's weight is variable between zero and any real number less than zero, and a positive rule's weight is variable between zero and any real number greater than zero. In either the illustrative embodiment or the alternative embodiment, if a rule's weight is zero (e.g., as adjusted by the adaptive adjustment process 336), the rule is effectively removed from the scoring process 306 and does not contribute to the score, even if the rule is activated in response to the financial account information and transaction information.

In the scoring process 306, the IHS determines the score by: (a) calculating a sum of weights of the rules that the IHS activates in response to the financial account information and transaction information; and (b) according to an algorithm (e.g., a mathematical algorithm), performing an algorithmic operation in response to the sum. In the illustrative embodiment, the algorithm is a logistic function algorithm (e.g., score=e^{sum}/ [1 + e^{sum}], where e is the base of the natural logarithm). In alternative embodiments, the IHS determines the score in response to other suitable algorithms.

After executing the scoring process 306 for a financial transaction request, the IHS executes the decision process 310 for the financial transaction request. In response to the score from the scoring process 306, and in response to first and second threshold values from the thresholds database 312, the decision process 310 determines whether the result is the approve result 314, the human review result 315, or the reject result 318. In doing so, the IHS performs the operations discussed hereinbelow. In the illustrative embodiment, the first threshold value is higher than the second threshold value; in an alternative embodiment, the first threshold value is equal to the second threshold value.

The decision process 310 begins by determining whether the score is less than the first threshold value. If so, the score indicates that the financial transaction request is likely non-fraudulent, and the IHS outputs: (a) the approve result 314 to the subsequent transaction review process 312; and (b) to the customer via the network 112, a signal indicating that the financial transaction request is approved. In response to such approval, the provider (associated with the financial transaction request) conducts the requested financial transaction with the customer's user.

Conversely, if the decision process 310 determines that the score is greater than the first threshold value, the decision process 310 determines whether the score exceeds the second threshold value. If so, the score indicates that the financial transaction request is likely fraudulent, and the IHS outputs: (a) the reject result 318 to the subsequent transaction review process 312; and (b) to the customer via the network 112, a signal indicating that the financial transaction request is rejected. In response to such rejection, the provider (associated with the financial transaction request) does not conduct the requested financial transaction with the customer's user.

If the decision process 310 determines that the score is greater than the first threshold value, yet less than the second threshold value, the IHS outputs the human review result 315 to the human review process 316. In response to the human review result 315 and information received from the human user 320, the human review process 316: (a) determines whether to output either the approve result 314 or the reject result 318 to the subsequent transaction review process 312; and (b) to the customer via the network 112, outputs a signal indicating whether the financial transaction request is approved or rejected. In response to such approval rejection, the provider (associated with the financial transaction request) either conducts or does not conduct the requested financial transaction with the customer's user. In such determination, the human review process 316 outputs the financial account information and transaction information to the human user 320, so that the human user 320 may review the financial account information and transaction information in the course of outputting information (e.g., approval or rejection of the financial transaction request) to the human review process 316.

In the illustrative embodiment, the adaptive adjustment process 336 performs its operations in a substantially "real time" and "online" manner. Moreover, in a version of the illustrative embodiment, the adaptive adjustment process 336 performs its operations according to a technique for improving a predictive accuracy of the weighting and threshold information in the databases 302 and 312, such as a technique that incorporates a gradient descent algorithm (e.g., a neural network back-propagation algorithm or an Adaline algorithm).

In an alternative embodiment, the adaptive adjustment process 336 performs its operations in a "batch" and "offline" manner (e.g., other than "real time"), in response to information in the databases 332 and 334. Moreover, in such an embodiment, the adaptive adjustment process 336 performs its operations according to a logistic regression technique, which initializes and adapts information in the databases 302 and 312, so that estimated probability of accuracy is maximized for the scoring process 306 and decision process 310.

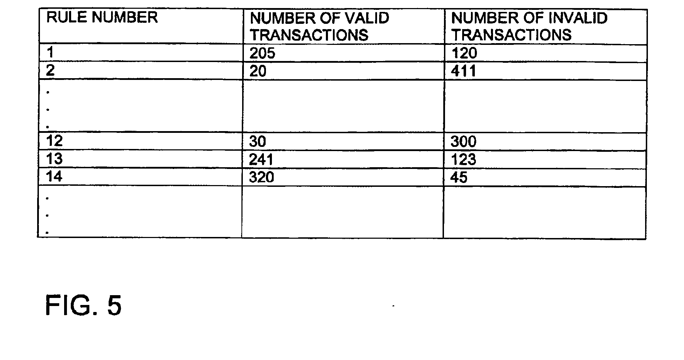

Also, the IHS includes a rules activity database (which is integrated with one or more of the other databases discussed hereinabove, such as databases 332 and 334). In response to information in the rules activity database, the adaptive adjustment process 336 performs its operations for initializing and adapting weighting information in the rules databases 302. Fig. 5 is a conceptual illustration of an organization of the rules history database according to the illustrative embodiment.

As shown in the example Fig. 5, the rules history database stores various types of information associated with rules in the rules database 302. Such types are illustrative, not exhaustive. In the example of Fig. 5, each rule (in the rules database 302) has an associated record in the rules history database. A rule's associated record includes: (a) the rule's identification number, (b) a historical number of non-fraudulent (e.g., valid) financial transaction requests that have satisfied the rule, and (c) a historical number of fraudulent (e.g., invalid) financial transaction requests that have satisfied the rule.

For example, in response to such information in the rules history database, the adaptive adjustment process 336 determines whether a rule in the rules database 302 is relatively effective, or instead relatively ineffective, in accurately determining whether a financial transaction request (submitted by a customer's user) is likely fraudulent. Accordingly, the adaptive adjustment process 336 determines that a negative rule is relatively effective if the rule's associated record (in the rules history database) includes a relatively high number of invalid financial transaction requests that have satisfied the rule. Conversely, the adaptive adjustment process 336 determines that the negative rule is relatively ineffective if the rule's associated record (in the rules history database) includes a relatively low number of invalid financial transaction requests that have satisfied the rule.

Likewise, the adaptive adjustment process 336 determines that a positive rule is relatively effective if the rule's associated record (in the rules history database) includes a relatively high number of valid financial transaction requests that have satisfied the rule. Conversely, the adaptive adjustment process 336 determines that the positive rule is relatively ineffective if the rule's associated record (in the rules history database) includes a relatively low number of valid financial transaction requests that have satisfied the rule.

Accordingly, in response to a rule proving to be relatively effective, the adaptive adjustment process 336 increases the rule's respective weight in the rules database 302. Conversely, in response to a rule proving to be relatively ineffective, the adaptive adjustment process 336 reduces the rule's respective weight in the rules database 302.

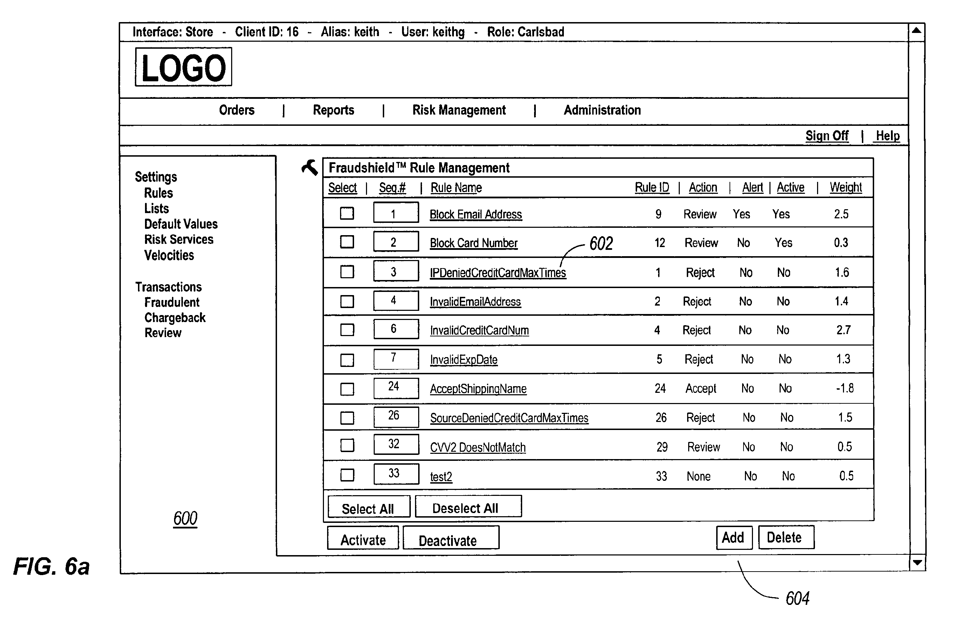

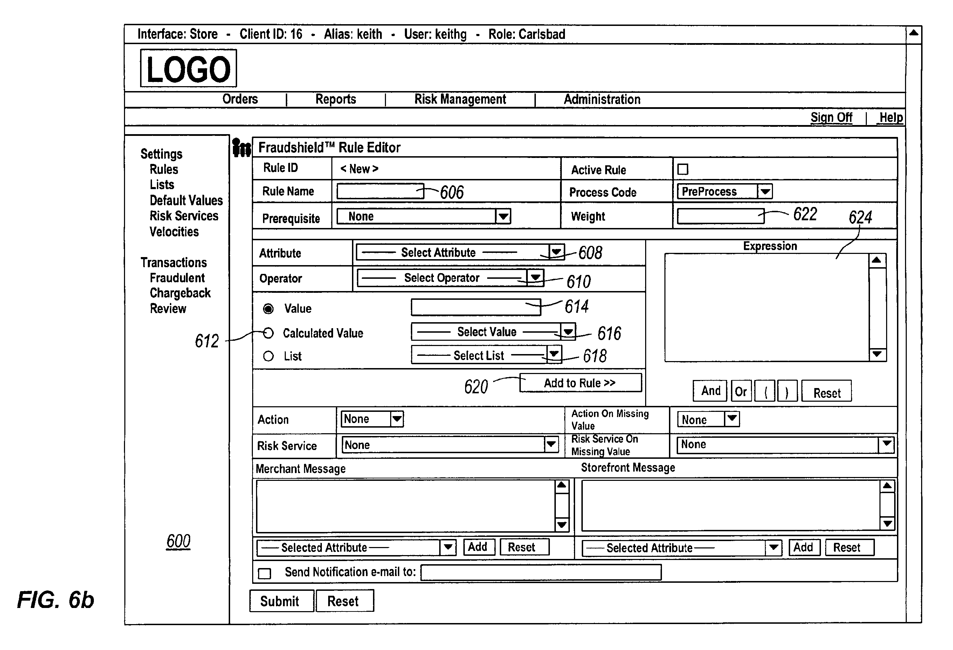

In addition to executing the processes discussed hereinabove, the IHS receives commands from the human user 308 and performs operations in response thereto, such as storing (e.g., adding), deleting, and/or modifying (e.g., editing, adjusting, revising): (a) information in the rules database 302, such as rule information and respective weighting information; and (b) information in the thresholds database 312, such as threshold information. Fig. 6a is an illustration of a visual image (e.g., "screen"), indicated generally at 600, which is displayed by a display device (e.g., the display device 208) of the IHS (e.g., the IHS of the provider 106 and/or 108, and/or of the credit processor 110). Likewise, Figs. 6b-d are illustrations of other versions of the screen 600 displayed by the IHS's display device.

As shown in the Fig. 6a version, the screen 600 includes a list of rule names (indicated generally at 602) and various "buttons." The rule names 602 and buttons are respectively selectable regions of the screen 600. Each of the rule names 602: (a) is associated with a respective rule in the rules database 302, and (b) is respectively selectable (e.g., "clickable") by the human user 308 for enabling the human user 308 to view and modify a specification of the associated rule.

For example, the human user 308 selects a region of the screen 600 by: (a) operating the IHS's pointing device to position a cursor overlapping with the region; and (b) after so positioning the cursor, activating a switch of the pointing device. Such selection of a region of the screen 600 by the human user 308 is referred to herein as the human user 308 "clicking" such region.

After clicking (or "selecting") a region of the screen 600, the human user 308 is able to specify alphanumeric character information. For example, the human user 308 specifies such alphanumeric character information by: (a) operating the IHS's electronic keyboard, so that the screen 600 displays such information within the selected region; and (b) pressing the keyboard's "Enter" key. Such operation of the electronic keyboard by the human user 308 is hereinafter referred to as the human user 308 "typing" or "entering" such information.

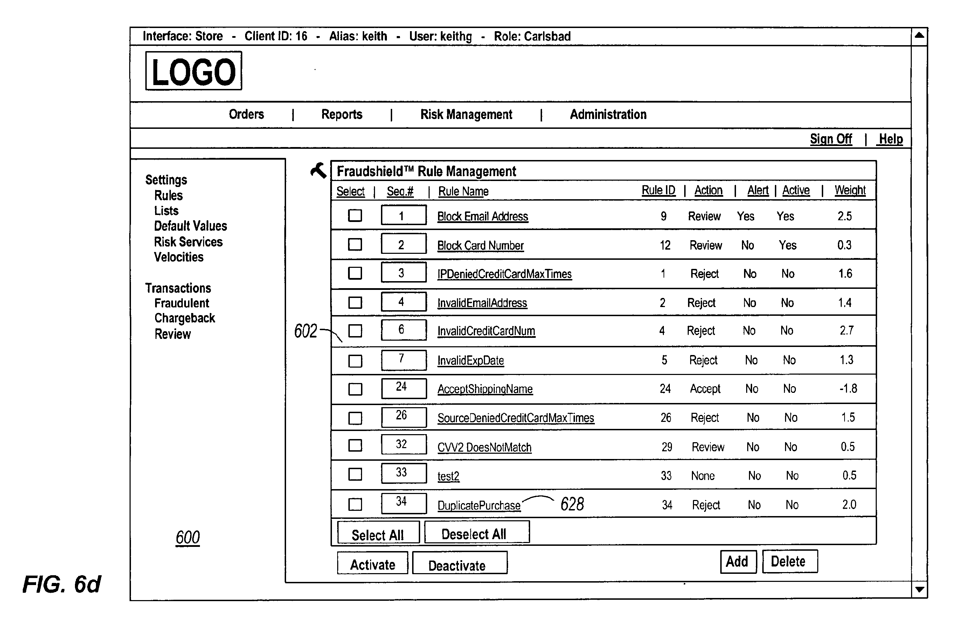

In response to the human user 308 clicking an Add button 604 in the Fig. 6a version of the screen 600, the IHS displays (on the IHS's display device) the Fig. 6b version of the screen 600. In response to the Fig. 6b version, the human user 308 is able to specify a rule by entering the rule's associated information in various regions of the screen 600. After the human user 308 so enters the rule's associated information (e.g., as shown in Fig. 6c for a "DuplicatePurchase" rule), the human user 308 is able to click a Submit button 626 for causing the IHS to write the specified rule for storage in the rules database 302. After such write, the IHS displays (on the IHS's display device) a revised version of the screen 600, such as the Fig. 6d version in which the rule names 602 include a listing 628 for the specified rule (e.g., the specified "DuplicatePurchase" rule).

The Fig. 6b version of the screen 600 includes: (a) a "rule name" field 606, in which the human user 308 is able to specify the rule's name; (b) a "weight" field 622, in which the human user 308 is able to specify the rule's weight in relation to the other rules; (c) an "attribute" field 608, in which the human user 308 is able to specify an attribute of the rule's expression by selecting from a "pull down" menu of candidate attributes; (d) an "operator" field 610, in which the human user 308 is able to specify an operator of the rule's expression by selecting from a "pull down" menu of candidate operators; and (e) a list field 612, in which the human user 308 is able to specify whether the rule's expression includes a predetermined value, a calculated value, or a list.

If the human user 308 specifies that the rule's expression includes a predetermined value, then the human user 308 is able to specify the predetermined value in a value field 614. Or, if the human user 308 specifies that the expression includes a calculated value, then the human user 308 is able to specify the calculated value in a field 616 by selecting from a "pull down" menu of candidate variables. Or, if the human user 308 specifies that the expression includes a list, then the human user 308 is able to specify the list in a field 618 by selecting from a "pull down" menu of candidate lists.

Also, in response to the human user 308 clicking an "Add to Rule" button 620, the IHS displays (in an expression field 624) the rule's expression according to information that the human user 308 specified in the fields 608, 610, 612, 614, 616, and 618. The Fig. 6c version of the screen 600 is an example of such a display.

In response to the human user 308 selecting a Submit button 626, the IHS writes the specified rule for storage in the rules database 302. After such write, the IHS displays (on the IHS's display device) a revised version of the screen 600, such as the Fig. 6d version in which the rule names 602 include a listing 628 for the specified rule (e.g., the specified "DuplicatePurchase" rule).

As shown in Figs. 6a and 6d, for each of the rule names 602 (each of which is associated with a respective rule), the screen 600 includes a respective associated: (a) sequence number, which specifies an order in which the IHS executes the rule in relation to the other rules; (b) rule identification number; (c) action for the IHS to favor (e.g., to be more likely to perform) in response to the rule being satisfied by a financial transaction request's financial account information and transaction information, such as the actions of accept (e.g., outputting the approve result 314 of Fig. 3), review (e.g., outputting the human review result 315 of Fig. 3), or reject (e.g., outputting the reject result 318 of Fig. 3); (d) flag to indicate whether the IHS is specified to alert a human user in response to the rule being so satisfied; (e) flag to indicate whether the rule is then-currently active; and (f) weight for the rule in relation to the other rules.

Moreover, in Figs. 6a and 6d, the human user 308 is able to: (a) individually select one or more of the rule names 602, and thereby select one or more of the rules that are respectively associated therewith; (b) activate the selected rule(s) by clicking the Activate button; (c) deactivate the selected rule(s) by clicking the Deactivate button; or (d) delete the selected rule(s) by clicking the Delete button. Also, in Figs. 6a and 6d, the screen 600 includes: (a) a Select All button, which the human user 308 is able to click for selecting all of the rules; and (b) a Deselect All button, which the human user 308 is able to click for deselecting all of the rules.

As shown in Figs. 6b and 6c, the screen 600 includes: (a) an Active Rule box, which is clickable by the human user 308 to activate the rule; (b) a "prerequisite" field, in which the human user 308 is able to specify a prerequisite (for determining whether a financial transaction request's financial account information and/or transaction information satisfies the rule) by selecting from a "pull down" menu of candidate prerequisites; (c) an And button, which is clickable by the human user 308 to insert a logical AND operator within the rule's expression; (d) an Or button, which is clickable by the human user 308 to insert a logical OR operator within the rule's expression; (e) a left parenthesis button and a right parenthesis button, which are clickable by the human user 308 to insert parentheses within the rule's expression; (f) a Reset button, which is clickable by the human user 308 to reset the rule's expression to a null state; (g) an Action field, in which the human user 308 is able to specify an action (for the IHS to favor in response to the rule being so satisfied) by selecting from a "pull down" menu of candidate actions, such as accept, review, reject, or none; (h) message fields, in which the human user 308 is able to specify one or more messages that the IHS will output for display to a merchant and/or storefront in response to whether the rule is so satisfied; and (i) an e-mail address field, in which the human user 308 is able to specify an e-mail address as the destination of such messages.

In the illustrative embodiment, the IHS (which executes the processes discussed hereinabove in connection with Figs. 3-6d) is a single IHS of one of the providers 106 or 108, or of the credit processor 110. In an alternative embodiment, the IHS is a distributed IHS of one or more of the providers 106 and/or 108, and/or of the credit processor 110. For example, in a first version of the alternative embodiment: (a) a credit processor (e.g., the credit processor 110) executes the scoring process 306, the subsequent transaction review process 322, and the adaptive adjustment process 336 of Fig. 3; and (b) a provider (e.g., the provider 106) executes the decision process 310 and the human review process 316 of Fig. 3. In a second version of the alternative embodiment, a provider and a credit processor execute one or more of the Fig. 3 processes in common.

Referring again to Fig. 2, the computer-readable medium 212 is a floppy diskette. The computer-readable medium 212 and the computer 204 are structurally and functionally interrelated with one another as described further hereinbelow. Each IHS of the illustrative embodiment is structurally and functionally interrelated with a respective computer-readable medium, similar to the manner in which the computer 204 is structurally and functionally interrelated with the computer-readable medium 212. In that regard, the computer-readable medium 212 is a representative one of such computer-readable media, including for example but not limited to the storage device 211.

The computer-readable medium 212 stores (e.g., encodes, or records, or embodies) functional descriptive material (e.g., including but not limited to software (also referred to as computer programs or applications) and data structures). Such functional descriptive material imparts functionality when encoded on the computer-readable medium 212. Also, such functional descriptive material is structurally and functionally interrelated to the computer-readable medium 212.

Within such functional descriptive material, data structures define structural and functional interrelationships between such data structures and the computer-readable medium 212 (and other aspects of the computer 204, the IHS 200 and the system 100). Such interrelationships permit the data structures' functionality to be realized. Also, within such functional descriptive material, computer programs define structural and functional interrelationships between such computer programs and the computer-readable medium 212 (and other aspects of the computer 204, the IHS 200 and the system 100). Such interrelationships permit the computer programs' functionality to be realized.

For example, the computer 204 reads (e.g., accesses or copies) such functional descriptive material from the computer-readable medium 212 into the memory device of the computer 204, and the computer 204 performs its operations (as described elsewhere herein) in response to such material which is stored in the memory device of the computer 204. More particularly, the computer 204 performs the operation of processing a computer application (that is stored, encoded, recorded or embodied on a computer-readable medium) for causing the computer 204 to perform additional operations (as described elsewhere herein). Accordingly, such functional descriptive material exhibits a functional interrelationship with the way in which computer 204 executes its processes and performs its operations.

Further, the computer-readable medium 212 is an apparatus from which the computer application is accessible by the computer 204, and the computer application is processable by the computer 204 for causing the computer 204 to perform such additional operations. In addition to reading such functional descriptive material from the computer-readable medium 212, the computer 204 is capable of reading such functional descriptive material from (or through) the network 112 which is also a computer-readable medium (or apparatus). Moreover, the memory device of the computer 204 is itself a computer-readable medium (or apparatus).

Although illustrative embodiments have been shown and described, a wide range of modification, change and substitution is contemplated in the foregoing disclosure and, in some instances, some features of the embodiments may be employed without a corresponding use of other features.

## Claims

1. A method performed by an information handling system ("IHS"), the method comprising:
in response to a plurality of rules having respective weights, determining whether a financial transaction request is likely fraudulent.

2. The method of claim 1, and comprising:
adjusting the weights in response to a command from a user.

3. The method of claim 1, wherein the financial transaction request is a first financial transaction request, and comprising:
in response to determining whether the first financial transaction request is actually fraudulent, adjusting the weights for determining whether a second financial transaction request is likely fraudulent.

4. The method of claim 1, wherein the IHS is a first IHS, and comprising:
receiving the financial transaction request from a second IHS.

5. The method of claim 4, wherein receiving the financial transaction request comprises:
receiving the financial transaction request from the second IHS through a global computer network.

6. The method of claim 5, and comprising:
to the second IHS through the global computer network, outputting an indication of whether the financial transaction request is likely fraudulent.

7. The method of claim 1, wherein the financial transaction request includes information about a financial account that is associated with the financial transaction request.

8. The method of claim 7, wherein the determining comprises:
in response to the information about the financial account, and in response to information about a financial transaction that is associated with the financial transaction request, determining whether the financial transaction request is likely fraudulent.

9. The method of claim 1, wherein the rules include a positive rule that, if satisfied, indicates that the financial transaction request has an increased likelihood of being non-fraudulent.

10. The method of claim 1, wherein the rules include a negative rule that, if satisfied, indicates that the financial transaction request has a reduced likelihood of being non-fraudulent.

11. The method of claim 1, wherein the rules include:
a positive rule that, if satisfied, indicates that the financial transaction request has an increased likelihood of being non-fraudulent; and
a negative rule that, if satisfied, indicates that the financial transaction request has a reduced likelihood of being non-fraudulent.

12. The method of claim 11, wherein:
a value of the positive rule's weight is variable between zero and a number having a first +/- sign; and
a value of the negative rule's weight is variable between zero and a number having a second +/- sign opposite of the first +/- sign.

13. A method performed by an information handling system ("IHS"), the method comprising:
determining whether a first financial transaction request is actually fraudulent; and
in response to determining whether the first financial transaction request is actually fraudulent, adjusting respective weights of a plurality of rules for determining whether a second financial transaction request is likely fraudulent.

14. The method of claim 13, and comprising:
in response to the weights and rules, determining whether the second financial transaction request is likely fraudulent.

15. The method of claim 14, and comprising:
determining whether the second financial transaction request is actually fraudulent; and
in response to determining whether the second financial transaction request is actually fraudulent, adjusting the weights for determining whether a third financial transaction request is likely fraudulent.

16. The method of claim 14, wherein the IHS is a first IHS, and comprising:
receiving the second financial transaction request from a second IHS.

17. The method of claim 16, wherein receiving the second financial transaction request comprises:
receiving the second financial transaction request from the second IHS through a global computer network.

18. The method of claim 17, and comprising:
to the second IHS through the global computer network, outputting an indication of whether the second financial transaction request is likely fraudulent.

19. The method of claim 13, wherein the first financial transaction request is actually non-fraudulent.

20. The method of claim 13, wherein the first financial transaction request is actually fraudulent.

21. The method of claim 13, wherein the first financial transaction request includes information about a financial account that is associated with the first financial transaction request.

22. The method of claim 13, and comprising:
adjusting the weights in response to a command from a user.

23. The method of claim 13, wherein adjusting the weights comprises:
adjusting the weights to improve a predictive accuracy of the weights.

24. The method of claim 23, wherein adjusting the weights comprises:
adjusting the weights in response to a gradient descent algorithm.

25. The method of claim 23, and comprising:
in response to determining whether the first financial transaction request is actually fraudulent, adjusting a threshold to improve a predictive accuracy of the threshold; and
in response to the weights and rules, determining a score that indicates whether the second financial transaction request is likely fraudulent, and applying the threshold to the score for determining whether the second financial transaction request is likely fraudulent.

26. The method of claim 25, wherein adjusting the weights comprises:
adjusting the weights in response to a gradient descent algorithm.

27. The method of claim 13, and comprising:
in response to determining whether the first financial transaction request is actually fraudulent, adjusting a threshold to improve a predictive accuracy of the threshold; and
in response to the weights and rules, determining a score that indicates whether the second financial transaction request is likely fraudulent, and applying the threshold to the score for determining whether the second financial transaction request is likely fraudulent.

28. The method of claim 27, wherein adjusting the weights comprises:
adjusting the weights in response to a gradient descent algorithm.

29. A method performed by an information handling system ("IHS"), the method comprising:
in response to a plurality of rules having respective weights, determining whether a financial transaction request is likely fraudulent;
if the financial transaction request is likely non-fraudulent, approving the financial transaction request; and
if the financial transaction request is likely fraudulent, rejecting the financial transaction request.

30. The method of claim 29, wherein determining whether the financial transaction request is likely fraudulent comprises:
in response to the weights and rules, determining a score that indicates whether the financial transaction request is likely fraudulent.

31. The method of Claim 30, wherein determining whether the financial transaction request is likely fraudulent comprises:
applying a threshold to the score for determining whether the financial transaction request is likely fraudulent.

32. The method of Claim 31, wherein applying the threshold comprises:
applying a plurality of thresholds to the score for determining whether: the financial transaction request is likely non-fraudulent; the financial transaction request is likely fraudulent; or the score inconclusively indicates whether the financial transaction request is likely fraudulent; and
if the score inconclusively indicates whether the financial transaction request is likely fraudulent, outputting the financial transaction request to a human for review.

33. A system comprising an information handling system, IHS, adapted to perform the method of one of claims 1 to 32.

34. A computer program product comprising:
a computer program processable by an information handling system, IHS, for causing the IHS to perform the method of one of claims 1 to 32; and
apparatus from which the computer program is accessible by the IHS.
